# EUROPÄISCHE PATENTSCHRIFT

(11) **EP 0 497 315 B1**
(45) Veröffentlichungstag und Bekanntmachung des Hinweises auf die Patenterteilung: **11.09.1996**
(21) Anmeldenummer: 92101471.8
(22) Anmeldetag: 29.01.1992
(51) Int. Cl.: E04D 3/06, E04B 7/16, A01G 9/24, E06B 7/086

(54) **Aus Glasplatten gebildete Wand- oder Dachfläche**
Wall or roof surfaces made of glass panes
Surfaces de mur ou de toiture réalisées en vitres

(30) Priorität: 31.01.1991 DE 4102922
(43) Veröffentlichungstag der Anmeldung: 05.08.1992
(73) Patentinhaber: Stebler Holding AG, CH-3000 Bern 13 (CH)
(72) Erfinder: Klemt, Arthur, D-80803 München (DE)
(74) Vertreter: Roshardt, Werner Alfred, Dipl.-Phys.

(56) Entgegenhaltungen:
- DE-A- 3 420 202
- FR-A- 2 240 333
- FR-A- 2 614 638
- US-A- 2 581 465
- US-A- 4 389 816

## Beschreibung

Die Erfindung bezieht sich auf eine Wand oder ein Dach aus Glasplatten, bei dem die Glasplatten an um Drehachsen verschwenkbaren Tragstützen gehaltert sind und mittels einer Verstelleinrichtung jeweils aus einer Schließstellung, in der sie sich schuppenförmig überdecken und zusammen mit einem Traggestell eine geschlossene Wand- oder Dachkonstruktion ausbilden, auf eine Seite der Wand bzw. des Dachs parallel zueinander bis zum Erreichen einer Offenstellung verschwenkbar sind.

Es ist auf unterschiedlichen Gebieten bekannt, Wände oder Dächer aus einer Vielzahl einzelner, verschwenkbarer Glasplatten auszubilden, um hierdurch eine großflächige Belüftung von Räumen zu erzielen, so etwa bei Dächern von Glashäusern für Gärtnereibetriebe, Ausstellungsräume o.ä. oder auch als verschwenkbare Fassaden-Wandelemente. Um allerdings eine ausreichende Wärmeisolierung erreichen zu können, hat es sich dabei bislang als erforderlich erwiesen, für die Glasplatten ausschließlich mindestens Zweischeiben-lsolierglas einzusetzen. Diese bekannte Bauweise ist jedoch mit deutlichen Nachteilen behaftet.

So ist die Verwendung von Isolierglas relativ aufwendig, wobei zudem die Isolierglasscheiben auch infolge ihres relativ hohen Gewichtes eine entsprechend große Dimensionierung der zugehörigen Tragstützen bedingen. Überdies führt die Verwendung von Isolierglas zu einer zeitlich nur begrenzten Haltbarkeit, die, je nach verwendetem Isolierglas, etwa zwischen 12 und 17 Jahren beträgt, wonach es zum Auftreten von Kondensationen im Isolierspalt kommt und ein Auswechseln der Isolierglasscheiben nötig wird.

Eine bekannte Konstruktion mit diesen Nachteilen, die dem eingangs genannten Stand der Technik entspricht, ist in der DE-A- 35 00 114 beschrieben.

Ausgehend hiervon stellt die Erfindung darauf ab, eine gattungsgemäße, aus verschwenkbaren Glasplatten gebildete Wand- oder Dachkonstruktion so weiterzuentwickeln, daß sie neben geringerem Gewicht und preisgünstigerer Herstellbarkeit auch noch eine gegenüber der bekannten Konstruktion erheblich verlängerte Haltbarkeit aufweist.

Erfindungsgemäß wird dies bei einer Wand oder einem Dach der eingangs genannten Art dadurch erreicht, daß die Glasplatten aus Einfachglasscheiben bestehen und in ihrer Schließstellung zwischen ihren einander überdeckenden Flächenbereichen einen Spalt ausbilden, daß bei jeder von einer vorhergehenden Glasplatte überdeckten und eine nachfolgende Glasplatte überdeckenden Glasplatte die Spalte der beiden Überdeckungsbereiche zusammen mindestens die Gesamtlänge der Glasplatte in Überdeckungsrichtung hin überdecken und daß jede Glasplatte an ihren beiden Endbereichen jeweils mit einem sich im wesentlichen über ihre quer zur Überdeckungsrichtung verlaufenden Breite erstreckenden und zur zugewandten Oberfläche der sie überdeckenden vorausgehenden bzw. der von ihr überdeckten nachfolgenden Glasplatte hin vorspringenden elastischen Dichtungsstrang derart versehen ist, daß dieser in der Schließstellung der Glasplatten an der Oberfläche der vorausgehenden bzw. nachfolgenden Glasplatte dichtend anliegt.

Durch die Maßnahmen nach der Erfindung werden die aufgezeigten Nachteile des bekannten Standes der Technik so gut wie völlig behoben. Infolge der Verwendung von Glasplatten aus Einfachglasscheiben wird der Einsatz von erheblich teurerem und in seiner Haltbarkeit eingeschränkterem Isolierglas entbehrlich und damit eine deutlich leichtere und auch in den Trag-, Halte- sowie Verschwenkgestellen geringer dimensionierbare, insgesamt also wesentlich billigere Dachkonstruktion geschaffen, deren Haltbarkeit hinsichtlich der Glasscheiben nahezu unbegrenzt ist, da die eingesetzten Einfachglasscheiben nicht den Haltbarkeitsbeschränkungen von Mehrschichtisoliergläsern unterliegen. Dennoch wird bei der Erfindung die gewünschte Wärmeisolierung zur Außenseite des Daches bzw. der Wand hin in ausreichendem Maße erreicht, indem aufeinanderfolgende Glasplatten sich gegenseitig so überdeckend angeordnet sind, daß sie in ihrer Schließstellung zwischen sich einen Spalt mit einem isolierenden Luftpolster ausbilden, der über die ganze Länge der einzelnen Glasplatte hinweg wirksam ist. Jede Glasplatte wird über ihre volle Länge hinweg entweder durch die vorausgegangene Glasplatte Uberdeckt oder überdeckt selbst die nachfolgende Glasplatte, so daß sie selbst in Überdeckungsrichtung insgesamt über ihre Gesamtlänge (wenn auch in zwei Abschnitten und auf unterschiedlichen Seiten) mit der vorausgegangenen bzw. folgenden Glasplatte funktionell eine "Doppelscheibe", ähnlich wie eine Isolierglasplatte, ausbildet. Durch die sich über die Breite der Glasplatten erstreckenden Dichtstreifen wird (in Überdeckungsrichtung der Glasplatten gesehen) in der Schließstellung eine für eine wirksame Wärmeisolierung ausreichend gute Abdichtung geschaffen, so daß jeweils in den Überdeckungsbereichen (und damit Uber die gesamte Länge der einzelnen Glasplatte hinweg) ein Spalt zwischen zwei aufeinanderfolgenden Glasplatten ausgebildet wird, der ein isolierendes Luftpolster aufnimmt. Dieser Spalt mit dem isolierenden Luftpolster wird dabei automatisch immer dann geschaffen, wenn die Glasplatten in ihre Schließstellung überführt werden, wobei er so lange erhalten bleibt, bis die Schließstellung wieder aufgehoben wird. Dabei werden bevorzugt Spalte einer Spaltbreite von 3 mm bis 5 mm eingesetzt. Bevorzugt werden nebeneinanderliegende Glasplatten an ihren einander zugewandten Seitenkanten Uber geeignete Profilgummistreifen miteinander verbunden, so daß dort keine Spalte zur Außenseite des Daches bzw. der Wand mehr vorliegen, wodurch selbst geringe Luftleckagen zwischen nebeneinanderliegenden Glasplatten ausgeschlossen sind. Bei geschlossener Stellung der Glasplatten liegen dann nur noch an den beiden Seitenrändern der gesamten Dach- bzw. Wandfläche im Bereich der sich Uberdeckenden Glasflächen kleine offene Spalte vor, die jedoch im Hinblick auf die insgesamt große Dach- bzw. Wandfläche keine nennenswerte oder gar wesentliche Beeinträchtigung des ansonsten erreichten Isoliereffektes bringen. Zudem stellt es auch keine Schwierigkeit dar, an den Außenseiten der jeweils äußersten Glasplatten jeder Plattenreihe entsprechende in Überdeckungsrichtung der einzelnen Platte verlaufende Längs-Dichtstreifen vorzusehen, so daß auf diesem Weg auch noch eine Abdichtung dieser seitlich am Gesamtdach verbleibenden Rest spalte möglich ist, wenn diese gewünscht werden sollte.

Wenn sich die Glasplatten im aufgeklappten Zustand befinden, lassen sich bei der erfindungsgemäßen Glaswand- bzw. Glasdachkonstruktion auch, die einzelnen Glasplatten unschwer vom Inneren des Raumes her reinigen, wobei gleichzeitig auch eine Reinigung der Dichtstreifen erfolgen kann. Dadurch können die Glasplatten selbst auf ihren in der Schließstellung einander zugewendeten Flächen stets rein gehalten werden, eine Möglichkeit, die bei Isolierglasscheiben grundsätzlich nicht besteht. Die Dichtungsstränge können zudem problemfrei ausgewechselt werden, falls sich örtlich am einen oder anderen Dichtungsstrang Beschädigungen ergeben oder sonstwie Undichtheiten auftreten.

In bevorzugter Weiterbildung der Erfindung werden die Glasplatten in sich schuppenförmig Uberdeckenden Reihen angeordnet und diese seitlich zueinander versetzt. Bei der Erfindung läßt sich ohne Probleme eine seitliche Versetzung der einzelnen Reihen von Glasplatten zueinander vorsehen, ohne daß dabei Undichtigkeiten auftreten, da die Dichtungsprofilstränge Stoßfugen unter Beibehaltung einer wirksamen Abdichtung ohne weiteres UberbrUcken können. Die bei Konstruktionen mit Isolierscheiben hierbei auftretenden Probleme entfallen bei der erfindungsgemößen Lösung völlig.

Als Dichtungsstränge lassen sich alle geeigneten Strangdichtungsprofile einsetzen, wobei solche aus geschäumtem elastischen Kunststoff, insbesondere aus Silikon, besonders empfehlenswert sind. Vorzugsweise sind die eingesetzten Dichtungsstränge als Strang-Lippendichtungen ausgeführt. Ganz besonders vorteilhaft ist es, wenn die Dichtungsstränge einen Hohlprofiquerschnitt aufweisen. In besonder bevorzugter Ausgestaltung der Erfindung wird der einzelne Dichtungsstrang an den Enden jeder Glasplatte in Form eines Silikon-Profildichtungsstrangs ausgeführt, der am betreffenden Ende der Glasplatte direkt auf diese aufgeklebt ist. Solche Silikon-Profildichtungsstränge sind jederzeit im Handel, meist sogar ab Lager, erhältlich und können, falls gewünscht, mit selbstklebendem RUcken versehen sein.

Bevorzugt sind alle Glasplatten gleich groß und überdecken sich in (Überdeckungsrichtung gesehen) gegenseitig jeweils über ihre halbe Gesamtlänge, wodurch jede Glasplatte (über ihre Gesamtlänge gesehen) jeweils unter Ausbildung eines Spaltes in ihrer ersten (von der Drehachse ausgehenden) Hälfte durch die vorausgehende Glasplatte von oben überdeckt wird, während sie mit ihrer anderen Hälfte die ihr folgende Glasplatte Uberdeckt, so daß die Spalte mit Luftpolster, welche die Glasplatte mit der vorangehenden und der nachfolgenden Glasplatte (in der Schließstellung) ausbildet, jeweils unmittelbar (in Längsrichtung gesehen) in der Plattenmitte (wenn auch auf unterschiedlichen Plattenseiten liegend) aneinander anschließen. Dadurch weden in der Schließstellung der Glasplatte über deren gesamte Länge hinweg zwei etwa gleich große, wärmeisolierende Luftpolster wirksam. Diese AusfUhrungsform ist besonders bevorzugt, da sie, im Vergleich zum Aufwand, die günstigsten Ergebnisse erzielt.

In vorteilhafter Weiterbildung der Erfindung wird ferner vorgesehen, daß die Dichtungsstränge an den Endbereichen jeder Glasplatte jeweils parallel zur entsprechenden Endkante verlaufen, wobei, besonders bevorzugt, alle Begrenzungskanten der Glasplatte geradlinig verlaufen, die Glasplatte also eine rechteckige Form aufweist. In bestimmten Fällen kann es aber auch von Vorteil sein, die ausschwenkseitigen Endkanten der Glasplatten gerundet auszuführen und dadurch die klassische Dachziegelform zu erreichen.

Die Erfindung wird nachfolgend anhand der Zeichnung im Prinzip beispielshalber noch näher erläutert. Es zeigen:
**Fig. 1** schematisch die Draufsicht auf einen Ausschnitt aus einem erfindungsgemäßen Dach;
**Fig. 2** eine (schematisierte) Schnittdarstellung längs I-I in Fig. 1;
**Fig. 3** die Darstellung einer einzelnen Glasplatte mit ihrer Halterung bei einer erfindungsgemäßen Dachkonstruktion;
**Fig. 4** eine prinzipielle Seitenansicht mehrerer in Öffnungsstellung aufgeklappter Glasplatten bei einem erfindungsgemäßen Dach;
**Fig. 5A, 5B, 5C und 5D** Querschnitte durch Dichtungsprofilstränge für Glasplatten bei einer erfindungsgemäßen Dach- oder Wandkonstruktion;
**Fig. 6** eine im Prinzip dargestellte und vergrößerte Detailansicht zweier Glasplatten in Schließstellung bei einer erfindungsgemäßen Dachkonstruktion mit einem Dichtungsprofilstrang, dessen Querschnitt in Öffnungsstellung dem Querschnitt nach Fig. 5A entspricht, und
**Fig. 7** eine perspektivische Teilschnittdarstellung (vergrößert) durch zwei über einen Profilgummistreifen an ihren Seitenrändern verbundenen Glasplatten einer Plattenreihe.

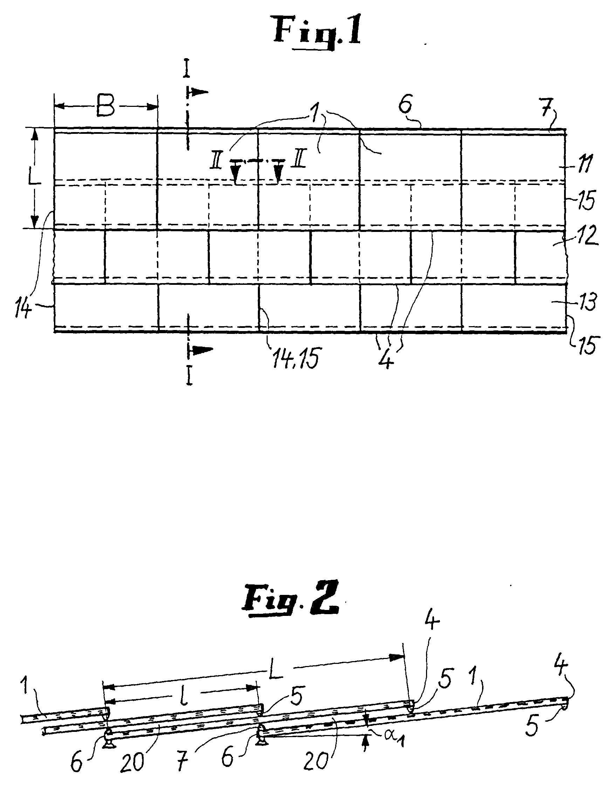

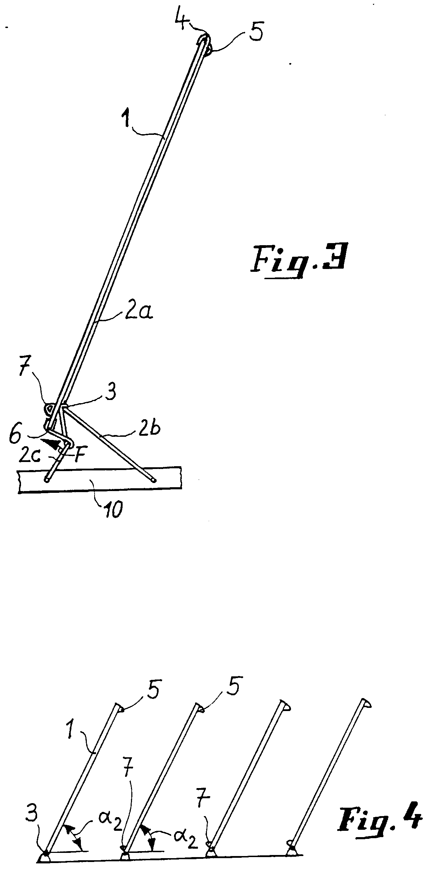

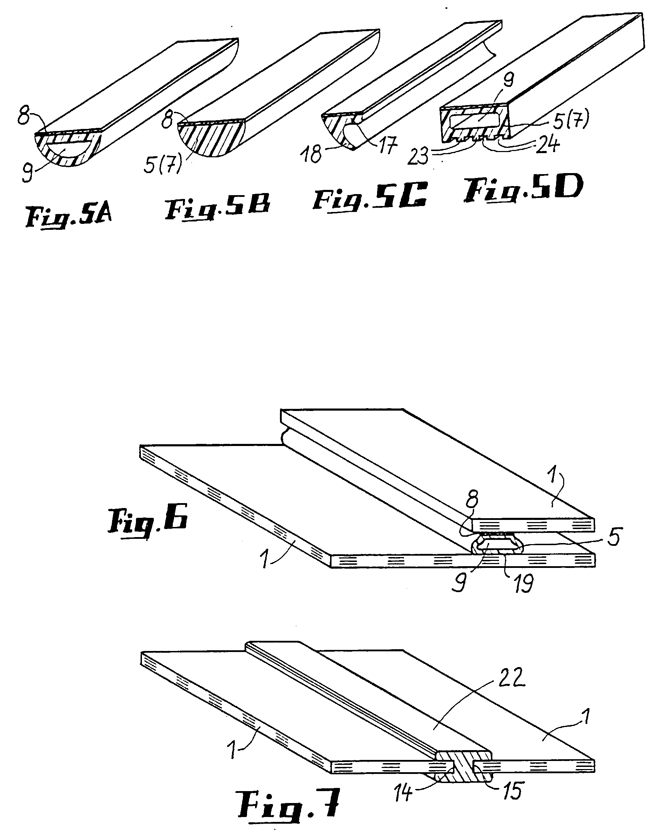

In Fig. 1 ist ein Ausschnitt aus einem Glasdach gezeigt, das aus in der Draufsicht rechteckförmigen Glasplatten 1 besteht, die alle eine gleiche Form haben und in einzelnen Reihen 11, 12, 13 übereinander angeordnet sind. Dabei überdecken die Glasplatten 1 jeder Reihe die der nachfolgenden Reihe schuppenförmig, wie sich dies aus Fig. 2 gut erkennen läßt, wobei Fig. 2 einen Schnitt längs Linie I-I in Fig. 1 darstellt.

In Fig. 3 ist eine Ausführungsform für die Halterung und Verschwenkbarkeit der Glasplatten 1 dargestellt. Dabei ist jede Glasplatte 1 als Einfachglasscheibe ausgebildet und innerhalb eines Drahtgestells 2a gehaltert. Dieses weist seinerseits an seinem einem Ende eine gelenkig mit ihm verbundene Stützstrebe 2c sowie in einer gewissen Entfernung von dieser eine ebenfalls an ihm verschwenkbar angegelenkte, weitere, aber längere Stützstrebe 2b auf. Die Länge der Stützstreben 2b, 2c ist so ausgelegt, daß zum einen in der in Fig. 3 gezeigten Öffnungsstellung der Glasscheibe 1 eine Selbsthemmung eintritt, die ein unerwünschtes selbsttätiges Verschließen der Glasscheibe verhindert. Darüberhinaus wird durch die gewählte Geometrie aber auch noch sichergestellt, daß beim Verschwenken der Glasscheibe 1 aus ihrer Schließstellung heraus im anfänglichen Öffnungsbereich eine raschere Öffnungsbewegung als im letzten Abschnitt des Öffnungsbereiches auftritt.

Zum Verschwenken der durch das Drahtgestell gebildeten Tragstütze 2a wird durch eine - in Fig. 3 nicht dargestellte - geeignete Schubstange (die z.B. an der Stützstrebe 2c angelenkt ist) eine Verschwenkung der Stützstrebe 2c, die ebenso wie die längere Stützstrebe 2b an einem Traggestell 10 verschwenkbar befestigt ist, in der entsprechenden Richtung bewirkt. Da in Fig. 3 die Öffnungsstellung, also die Endstellung der Tragstütze 2a in Öffnungsrichtung, gezeigt ist, kann hier nur noch eine Verschwenkung in Richtung auf die Schließstellung (durch Verschwenkung der Stütze 2c in Richtung des Pfeiles F) stattfinden. Eine solche Stützenanordnung ist im einzelnen noch genauer in der DE-A-35 90 114 beschrieben, worauf verwiesen sei.

Die Verschwenkung der in Fig. 3 gezeigten Glasscheibe 1 mit ihrer Tragstütze 2a findet um die Drehachse 3 statt, die infolge der unterschiedlichen Länge der Stützstreben 2b, 2c allerdings im Verlauf der Öffnungs- bzw. Schließbewegung auch ihre Relativlage zum Traggestell 10 ändert.

Es besteht aber auch die Möglichkeit, die die Glasplatten 1 aufnehmenden Tragstützen 2a nur über eine relativ zum Tragegestell 10 ortsfest angebrachte Verschwenkachse 3 zu verschwenken, wie dies bei der Darstellung nach Fig. 2 gezeigt ist.

Wie die Fig. 2 und 3 zeigen, ist an der Unterseite jeder Glasplatte 1 an deren frei verschwenkbarem Ende 4 ein Dichtungsstrang 5 befestigt, der dabei über die Unterseite der Glasplatte vorsteht. Ähnlich ist im Bereich des anderen Endes 6 der Glasplatte 1 wiederum ein Dichtungsstrang 7 angebracht, der allerdings auf die andere Seite der Glasplatte 1 vorsteht. Da bei der in Fig. 3 gezeigten Konstruktion die Drahtführung der Tragstütze 2a dieses andere Ende 6 der Glasplatte 1 umgreift und es auf der Oberseite der Glasplatte 1 etwas überdeckt, ist hier der Dichtungsstrang 7 zweckmäßigerweise in einer kleinen Entfernung von diesem Ende 6 der Glasplatte 1 so vorgesehen, daß er erst hinter dem Ende der die Glasplatte 1 dort umgreifenden Drahthalterung 2a sitzt. Es sind natürlich auch andere Möglichkeiten zur Ausbildung der Tragstütze gegeben, bei denen diese das Ende 6 der Glasplatte 1 z.B. gar nicht übergreift, so daß in solchen Fällen auch der Dichtungsstrang 7 bis unmittelbar oder sehr nahe am Ende 6 der Glasplatte 1 angebracht werden kann. Völlig dasselbe gilt auch bei einer Verschwenkanordnung mit nur einem einzigen ortsfesten Verschwenkgelenk 3, wie sie in Fig. 2 bzw. 4 dargestellt ist.

Bei dem in Fig. 1 und 2 dargestellten Ausführungsbeispiel weisen die Glasplatten 1 in Überdeckungsrichtung eine Gesamtlänge L auf, wobei jede einzelne Glasplatte 1 die Glasplatte 3 der ihr folgenden Reihe schuppenförmig über eine Länge 1 hinweg überdeckt, die der Hälfte der Gesamtlänge L entspricht, also gilt: 1 = L/2. Auf diese Weise wird, wie aus Fig. 2 entnehmbar ist, für jede Glasplatte 1, die von einer anderen Glasplatte überdeckt wird und ihrerseits eine nachfolgende Glasplatte überdeckt, erreicht, daß jeweils über ihre Gesamtlänge L hinweg eine Überdeckung derart vorliegt, daß die betreffende Glasplatte 1 an jeder Stelle entweder durch die vorhergehende Glasplatte Uberdeckt wird oder ihrerseits die nachfolgende Glasplatte überdeckt. Wie Fig. 2 zeigt, überdecken sich die Glasplatten 1 in ihrer Schließstellung jeweils unter Ausbildung eines Spaltes 20 zwischen ihren einander zugewendeten Flächen, wobei dieser Spalt 20 in seiner Überdeckungsrichtung jeweils von der am frei verschwenkbaren Ende 4 der überdeckenden Glasplatte 1 angebrachten Dichtung 5 und der am verschwenkseitigen Ende 6 der überdeckten Glasplatte 1 vorgesehenen Dichtung 7 in Längsrichtung hin nach außen abgedichtet wird. Hierdurch wird bei Erreichen der Schließstellung der Glasplatten 1 in den spaltförmigen Zwischenräumen 20 jeweils ein Luftpolster eingeschlossen, das eine gute Wärmeisolation zwischen der Innen- und der Außenseite der durch die Glasplatten 1 gebildeten Dach- oder Wandfläche bewirkt. Dabei wird bei jeder Glasplatte 1, die von einer vorhergehenden Glasplatte schuppenförmig Uberdeckt wird und ihrerseits eine nachfolgende Glasplatte schuppenförmig Uberdeckt, Uber die gesamte Glasplattenlänge L hinweg bei Erreichen der Schließstellung die Ausbildung eines Luftpolsters wirksam, nämlich längs der eine Hälfte ihrer Länge oberhalb der Glasplatte in Verbindung mit der Überdeckung durch die vorhergehende Glasplatte und längs der zweiten, zum verschwenkseitigen Ende 4 hin gerichteten Hälfte auf der Glastplatten-Unterseite, die dort die erste Hälfte der folgenden Glasplatte von oben her Uberdeckt und mit dieser unter Ausbildung eines Spaltes 20 ebenfalls ein Luftpolster schafft.

Sobald die Glasplatten 1 aus ihrer in Fig. 2 gezeigten Schließstellung in Richtung auf die Öffnungstellung hin aufgeschwenkt werden, wird die Ausbildung des Spaltes 20 aufgehoben, wie dies für eine beliebige Zwischenstellung α₂ in Fig. 4 gezeigt ist. Die Platten können dann, etwa aus der Innenseite des abgedeckten Raumes her, problemfrei gereinigt oder auch, falls erforderlich, ausgewechselt werden. In ihrer geschlossenen Ausgangsstellung (Fig. 2) sind die Platten nur um einen kleinen Anstellwinkel α₁ angestellt.

Für die Dichtungstränge werden elastische Dichtungsmaterialien eingesetzt, wobei alle geeigneten Querschnitte verwendet werden können. In den Fig. 5A, 5B, 5C und 5D sind unterschiedliche Querschnittsformen für Dichtstränge dargestellt. Fig. 5C zeigt einen Profilstrang in Form einer Lippendichtung, bei der an einem breiten Profilfuß 17, der Uber eine selbstklebende RUckschicht 8 an einer Glasfläche befestigbar ist, eine schräge Dichtlippe 18 vorragt, die bei Dichteingriff von der Gegenfläche der anliegenden Glasplatte elastisch verbogen wird und durch ihre elastischen Rückstellkräfte die gewünschte Dichtwirkung auslöst. Die Fig. 5A, 5B und 5D zeigen Dichtungsquerschnitte ohne Dichtlippe, die in Form einer gerundeten Wölbung (Fig. 5A und 5B) bzw. in Form eines Rechteckprofils (Fig. 5D) ausgebildet sind, wobei die Dichtung aus Fig. 5B aus geschäumtem Vollmaterial besteht, während die Dichtungen gemäß den Fig. 5A und 5D aus geschäumtem oder ungeschäumtem Material gefertigt sind und in ihrem Inneren jeweils einen Hohlraum 9 aufweisen, der (vgl. Fig. 6) bei Dichteingriff eine besonders gute Deformierbarkeit Uber die Querschnittsbreite hinweg zuläßt, wodurch es zur Ausbildung einer besonders großen Dicht-Anlagefläche 19 (Fig. 6) mit günstigen Andruckverhältnissen an der Glasplatte 1 kommt. Fig. 5D zeigt überdies noch spezifische Anlagestege 23 auf der Dichtseite, zwischen denen Rinnen 24 zum Ablauf von in den Dichtbereich eindringender Feuchtigkeit ausgebildet werden.

Als besonders empfehlenswertes Material fUr die Ausbildung der Strangdichtungen haben sich geeignete Silikon-Kautschukmischungen bewährt, insbesondere für den Fall von Dächern, bei denen eine gute UV-Strahlungsbeständigkeit und auch eine günstige Ozon-Halterungsbeständigkeit gegeben sein muß.

Bei Wänden, die im Inneren von Gebäuden eingesetzt werden, können solche Vorgaben jedoch gegebenenfalls weniger wichtig sein, so daß in diesen Fällen auch andere Dicht materialien, insbesondere thermoplastische Kautschuke, Verwendung finden können.

Fig. 7 zeigt in vergrößerter Teilschnittdarstellung die Verbindung zweier innerhalb einer Plattenreihe (hier: die Plattenreihe 11 aus Fig. 1) nebeneinander liegender Glasplatten 10 längs ihrer einander zugewendeten Seitenränder 14 bzw. 15 mittels eines geeignet profilierten Profilgummistreifens 22. Auf diese Weise können alle in der betreffenden Plattenreihe 11 bzw. 12 bzw. 13 liegenden Glasplatten 1 elastisch miteinander verbunden werden, wodurch nicht nur eine wirksame Abdichtung der Spalte 20 in der Schließstellung auch im Bereich der Stoßfuge, sondern daneben auch noch eine erleichterte Öffnung aller Glasplatten einer Plattenreihe erreichbar ist.

## Patentansprüche

1. Wand oder Dach aus Glasplatten (1), bei dem die Glasplatten (1) an um Drehachsen (3) verschwenkbaren Tragstützen (2a) gehaltert sind und mittels einer Verstelleinrichtung jeweils aus einer Schließstellung, in der sie sich schuppenförmig überdecken und zusammen mit einem Traggestell (10) eine geschlossene Wand- oder Dachkonstruktion ausbilden, auf einer Seite der Wand bzw. des Daches parallel zueinander bis zum Erreichen einer Offenstellung verschwenkbar sind, **dadurch gekennzeichnet,** daß die Glasplatten (1) ) aus Einfachglasscheiben bestehen und in ihrer Schließstellung zwischen ihren sich überdeckenden Bereichen einen Spalt (20) ausbilden, daß bei jeder in Schließstellung von einer vorhergehenden Glasplatte überdeckten und eine nachfolgende Glasplatte überdeckenden Glasplatte (1) die Spalte (20) der beiden Überdeckungsbereiche zusammen mindestens die Gesamtlänge (L) der Glasplatte (1) in Überdeckungsrichtung hin überdecken und daß die Glasplatte (1) an ihren Längs-Endbereichen (4, 6) jeweils mit einem sich im wesentlichen über ihre quer zur Überdeckungsrichtung verlaufenden Breite (B) erstreckenden und zur Oberfläche der überdeckenden vorausgehenden bzw. der überdeckten nachfolgenden Glasplatte (1) hin vorspringenden Dichtungsstrang (5, 7) derart versehen ist, daß dieser in der Schließstellung der Glasplatten (1) an der Oberfläche der vorausgehenden bzw. nachfolgenden Glasplatte (1) dichtend anliegt.

2. Wand oder Dach aus Glasplatten nach Anspruch 1, dadurch gekennzeichnet, daß die Glasplatten (1) in Reihen (11; 12; 13) angeordnet und diese seitlich zueinander versetzt sind.

3. Wand oder Dach aus Glasplatten nach Anspruch 1 oder 2, dadurch gekennzeichnet, daß der Dichtungsstrang (5, 7) an den Enden (4, 6) jeder Glasplatte (1) einen Hohlprofilquerschnitt (9) aufweist.

4. Wand oder Dach aus Glasplatten nach einem der Ansprüche 1 bis 3, dadurch gekennzeichnet, daß jeder Dichtungsstrang in Form einer Strang-Lippendichtung (17, 18) ausgebildet ist.

5. Wand oder Dach aus Glasplatten nach einem der Ansprüche 1 bis 4, dadurch gekennzeichnet, daß jeder Dichtungsstrang aus geschäumtem Kunststoff besteht.

6. Wand oder Dach aus Glasplatten nach einem der Ansprüche 1 bis 5, dadurch gekennzeichnet, daß jeder Dichtungsstrang (5, 7) als Silikon-Profildichtungsstrang ausgeführt und auf der Glasplatte (1) aufgeklebt ist.

7. Wand oder Dach aus Glasplatten nach einem der Ansprüche 1 bis 6, dadurch gekennzeichnet, daß die Glasplatten (1) gleich groß sind und sich gegenseitig jeweils in Überdeckungssrichtung mit ihrer halben Erstreckungslänge (L/2) überdecken.

8. Wand oder Dach aus Glasplatten nach einem der Ansprüche 1 bis 7, dadurch gekennzeichnet, daß alle Begrenzungskanten (4, 6, 13, 14) jeder Glasplatte (1) geradlinig verlaufen.

9. Wand oder Dach aus Glasplatten nach Anspruch 8, dadurch gekennzeichnet, daß der Dichtungsstrang (5, 7) parallel zum Endbereich (4, 6) der Glasplatte (1) verläuft.

10. Wand oder Dach aus Glasplatten nach einem der Ansprüche 1 bis 9, dadurch gekennzeichnet, daß der Spalt (20) zwischen den sich jeweils überdeckenden Flächen zweier Glasplatten (1) eine Spaltweite von 3 bis 5 mm aufweist.

11. Wand oder Dach aus Glasplatten nach einem der Ansprüche 1 bis 10, dadurch gekennzeichnet, daß in einer Reihe (11, 12, 13) nebeneinanderliegende Glasplatten (11) an ihren nebeneinanderliegenden Seitenkanten (14, 15) mittels Gummiprofilstreifen (22) miteinander verbunden sind.

## Claims

1. Wall or roof of glass panes (1), with the glass panes (1) held by supports (2a) which are pivotal around rotary axes (3) and pivotal on one side of the wall or the roof parallel to each other by means of an adjusting mechanism from a respective shut position in which they scalelike overlap each other and, together with a support frame (10), form a closed wall or roof structure, **characterized in that** the glass panes (1) are made of single glass panes and form, in their shut position, a gap (20) between their overlapping areas, that with each glass pane (1) which is, in the shut position, covered by a prior glass pane and covering a following glass pane, the gap (20) of both overlapping areas together cover at least the total length (L) of the glass pane (1) in the overlap direction, and that the glass pane (1) is in its longitudinal end areas (4, 6) provided with a respective sealing web (5, 7), which essentially extends over its width (B), which extends transversely to the overlap direction, and towards the surface of the overlapping previous or the covered following glass pane (1), so that it sealingly abuts the surface of the previous or the following glass pane (1) when in the shut position.

2. Wall or roof of glass panes according to Claim 1, **characterized in that** the glass panes (1) are arranged in rows (11; 12; 13), and these are laterally offset to each other.

3. Wall or roof of glass panes according to Claim 1 or 2, **characterized in that** the sealing web (5, 7) comprises at the ends (4, 6) of each glass pane (1) a hollow-profile cross-section (9).

4. Wall or roof of glass panes according to one of Claims 1 to 3, **characterized in that** each sealing web is designed in the form of a web-lip seal (17, 18).

5. Wall or roof of glass panes according to one of Claims 1 to 4, **characterized in that** each sealing web is made of foamed plastic material.

6. Wall or roof of glass panes according to one of Claims to 5, **characterized in that** each sealing web (5, 7) is in the form of a silicon profile sealing web and glued onto the glass pane (1).

7. Wall or roof of glass panes according to one of Claims 1 to 6, **characterized in that** the glass panes (1) are of identical size and overlap each other in the respective overlap direction by half their extended length (L/2).

8. Wall or roof of glass panes according to one of Claims 1 to 7, **characterized in that** all defining edges (4, 6, 13, 14) of each glass pane (1) extend in a straight line.

9. Wall or roof of glass panes according to Claim 8, **characterized in that** the sealing web (5, 7) extends parallel to the end area (4, 6) of the glass pane (1).

10. Wall or roof of glass panes according to one of Claims 1 to 9, **characterized in that** the gap (20) between the respective overlapping surfaces of two glass panes (1) has a gap width between 3 and 5 mm.

11. Wall or roof of glass panes according to one of Claims 1 to 10, **characterized in that** glass panes (1) lying adjacent to each other in a row (11, 12, 13) are interconnected at the adjacent lateral edges (14, 15) by means of rubber profile strips (22).

## Revendications

1. Mur ou toit formé de plaques de verre (1), dans lequel les plaques de verre (1) sont fixées sur des montants de support (2a) pouvant basculer autour d'axes de rotation (3), et peuvent basculer, sous l'action d'un dispositif de déplacement, d'un côté du mur ou du toit et parallèlement entre elles, respectivement depuis une position fermée, dans laquelle elles se recouvrent à la manière des tuiles d'un toit et forment conjointement avec un châssis de support (10) une structure fermée de mur ou de toit, jusqu'à atteindre une position ouverte, caractérisé en ce que les plaques de verre (1) sont constituées par des vitres simples et, dans leur position fermée, définissent une fente (20) entre leurs parties qui se recouvrent, que pour chaque plaque de verre (1) qui, dans la position fermée, est recouverte par une plaque de verre précédente et recouvre une plaque de verre suivante, les fentes (20) des deux parties en recouvrement s'étendent ensemble au moins sur la longueur totale (L) de la plaque de verre (1) dans la direction de recouvrement, et que la plaque de verre (1) comporte, sur ses parties d'extrémité longitudinale (4,6), respectivement un cordon d'étanchéité (5,7) qui s'étend essentiellement sur toute la largeur (B) considérée transversalement à la direction de recouvrement, et qui est en saillie par rapport à la surface de la plaque de verre précédente (1), qui est en recouvrement, et de la plaque de verre suivante (1), qui est recouverte, de telle sorte que, lorsque les plaques de verre (1) sont dans la position fermée, ce cordon d'étanchéité s'applique contre la surface de la plaque de verre (1) précédente et de la plaque de verre (1) suivante.

2. Mur ou toit formé de plaques de verre selon la revendication 1, caractérisé en ce que les plaques de verre (1) sont disposées suivant des rangées (11;12;13) et que ces rangées sont décalées latéralement les unes par rapport aux autres.

3. Mur ou toit formé de plaques de verre selon la revendication 1 ou 2, caractérisé en ce que le cordon d'étanchéité (5,7) possède une section transversale (9) de profilé creux au niveau des extrémités (4,6) de chaque plaque de verre (1).

4. Mur ou toit formé de plaques de verre selon l'une des revendications 1 à 3, caractérisé en ce que chaque cordon d'étanchéité est agencé sous la forme d'un cordon d'étanchéité en forme de lèvre (17,18).

5. Mur ou toit formé de plaques de verre selon l'une des revendications 1 à 4, caractérisé en ce que chaque cordon d'étanchéité est formé d'une matière plastique à l'état de mousse.

6. Mur ou toit formé de plaques de verre selon l'une des revendications 1 à 5, caractérisé en ce que chaque cordon d'étanchéité (5,7) est réalisé sous la forme d'un cordon d'étanchéité profilé en silicone et est collé sur la plaque de verre (1).

7. Mur ou toit formé de plaques de verre selon l'une des revendications 1 à 6, caractérisé en ce que les plaques de verre (1) ont des dimensions identiques et se recouvrent sur la moitié de leur étendue en longueur (L/2) respectivement dans la direction de recouvrement.

8. Mur ou toit formé de plaques de verre selon l'une des revendications 1 à 7, caractérisé en ce que les bords d'extrémité (4,6,13,14) de chaque plaque de verre (1) sont tous rectilignes.

9. Mur ou toit formé de plaques de verre selon la revendication 8, caractérisé en ce que le cordon d'étanchéité (5,7) est parallèle au bord d'extrémité (4,6) de la plaque de verre (1).

10. Mur ou toit formé de plaques de verre selon l'une des revendications 1 à 9, caractérisé en ce que la fente (20) entre les surfaces, qui se recouvrent, de deux plaques de verre (1) possède une largeur de 3 à 5 mm.

11. Mur ou toit formé de plaques de verre selon l'une des revendications 1 à 10, caractérisé en ce que des plaques de verre (1) disposées côte-à-côte dans une rangée (11,12,13) sont reliées entre elles, au niveau de leurs bords latéraux (14,15) situés côte-à-côte, par des barrettes profilées en caoutchouc (22).
